# EUROPÄISCHE PATENTSCHRIFT

(11) **EP 0 612 807 B1**
(45) Veröffentlichungstag und Bekanntmachung des Hinweises auf die Patenterteilung: **18.11.1998**
(21) Anmeldenummer: 94102221.2
(22) Anmeldetag: 14.02.1994
(51) Int. Cl.: C08L 67/02, C08K 5/3492

(54) **Thermoplastische Polyalkylenterephthalat-Formmassen**
Thermoplastic polyalkylene terephthalate moulding compositions
Masses à mouler thermoplastiques de polytéréphtalate d'alkylène

(30) Priorität: 26.02.1993 DE 4305947
(43) Veröffentlichungstag der Anmeldung: 31.08.1994
(73) Patentinhaber: BAYER AG, 51368 Leverkusen (DE)
(72) Erfinder: Sarabi, Bahman, Dr., D-47803 Krefeld (DE); Idel, Karsten-Josef, Dr., D-47802 Krefeld (DE); Reinking, Klaus, Dr., D-42929 Wermelskirchen (DE); Zander, Klaus, Dr., D-45478 Mülheim (DE); Kraft, Klaus, Dr., D-47800 Krefeld (DE)

(56) Entgegenhaltungen:
- EP-A- 0 523 933
- WO-A-93/04125
- FR-A- 2 007 511
- FR-A- 2 213 312
- LU-A- 54 615
- US-A- 4 141 882

## Beschreibung

Gegenstand der Erfindung sind thermoplastische Polyalkylenterephthalat-Formmassen mit verbesserter Zähigkeit sowie erhöhter Schmelzviskosität.

Thermoplastische Polyester-Formmassen z.B. Polybutylenterephthalat (PBT) oder Polyethylenterephthalat (PET) zeichnen sich durch eine Reihe vorteilhafter Eigenschaften wie hohe Steifigkeit, hohe Lösungsmittelbeständigkeit und gute Verarbeitbarkeit beim Spritzgießen aus. Darüber hinaus besitzen thermoplastische Polyalkylenterephthalat-Formmassen höhere Wärmeformbeständigkeit, insbesondere dann, wenn sie durch Glasfasern und/oder Füllstoffe verstärkt sind. Derartige Polyester-Formmassen werden daher vielfach in der Elektro- und KFZ-Industrie eingesetzt.

Ein Nachteil dieser Polyester-Formmassen ist jedoch ihre vielfach unbefriedigende Zähigkeit, die ihre Anwendung für schlagbeanspruchte Formteile, insbesondere dünnwandige Formteile einschränkt. Dieser Nachteil ist umso ausgeprägter, je niedriger die Viskosität des Polyesters, d.h. je niedriger sein Molekulargewicht ist.

Man hat daher Verfahren entwickelt, die es ermöglichen, die Viskosität der bei der Produktion primär niedrigviskos anfallenden Polyester zu erhöhen. Ein solches Verfahren ist die Festphasennachkondensation, bei der die Polyestergranulate unter Stickstoff bei etwa 200°C längere Zeit gelagert werden (vergl. Acta Polym. 31 (1980) 108). Dieses Verfahren ist nicht nur aufwendig, sondern verlangt die Einhaltung eines bestimmten Endgruppenverhältnisses (OH/COOH) für eine reproduzierbare Prozeßführung.

Es besteht daher ein Interesse daran, die Viskositäten der Polyester-Formmassen zu erhöhen, ohne die mit der Festphasennachkondensation verbundenen Nachteile in Kauf nehmen zu müssen.

Es wurde nun gefunden, daß Polyester-Formmassen, die durch Vermischen von Polyalkylenterephthalat mit Epoxy-isocyanurat-Harzen (EPIC-Harzen) in schmelzflüssigem Zustand erhalten werden, eine verbesserte Viskosität und verbesserte mechanische Eigenschaften haben. Die so erhaltenen Polyester-Formmassen besitzen erheblich höhere Schlagzähigkeiten, Reißdehnungen und Schmelzviskositäten als die eingesetzten Polyester.

Gegenstand der Erfindung sind daher thermoplastische Polyester-Formmassen, hergestellt durch Abmischen von
A) 99,9 bis 80,0 Gew.-%, vorzugsweise 99,9 bis 85, insbesondere 99,5 bis 90 Gew.%, thermoplastischer Polyalkylenterephthalate
mit
B) 0,1 bis 20,0 Gew.-%, vorzugsweise 0,1 bis 15, insbesondere 0,5 bis 10 Gew.-%, Epoxy-isocyanurat-Harz, welches hergestellt
   ist aus Polyglycidylether mehrwertiger Phenole und Polyisocyanaten, wobei die Polyisocyanate hergestellt werden aus Verbindungen der Formel (I):

   Q(NCO)ₙ (I)

   in der
   - n: für die Zahl 2, 3 oder 4 steht
   und
   - Q: einen aliphatischen Kohlenwasserstoffrest mit 2 bis 18 C-Atomen,
   einen cycloaliphatischen Kohlenwasserstoffrest mit 4 bis 15 C-Atomen,
   einen aromatischen Kohlenwasserstoffrest mit 6 bis 15 C-Atomen oder
   einen araliphatischen Kohlenwasserstoffrest mit 8 bis 15 C-Atomen, bedeutet, wobei die cycloaliphatischen, aromatischen oder araliphatischen Kohlenwasserstoffreste durch Alkyl substituiert sein können,
wobei das Äquivalentverhältnis von Isocyanatgruppen zu Epoxidgruppen 1,2 : 1 bis 500 : 1 ist, in der Schmelze.

Polyalkylenterephthalate im Sinne der vorliegenden Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen oder Mischungen dieser Diole. Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hauser-Verlag, München 1973).

Bevorzugte Polyalkylenterephthalate enthalten mindestens 80, vorzugsweise 90 Mol.-%, bezogen auf die Dicarbonsäurekomponente, Terephthalsäurereste und mindestens 80, vorzugsweise mindestens 90 Mol.-%, bezogen auf die Diolkomponente, Ethylenglykol- und/oder Butandiol-1,4-reste.

Die bevorzugten Polyalkylenterephthalate können neben Terephthalsäureresten bis zu 20 Mol.-% Reste anderer aromatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacin-, Acelain-, Cyclohexandiessigsäure. Die bevorzugten Polyalkylenterephthalate können neben Ethylen- bzw. Butandiol-1,4-glykolresten bis zu 20 Mol.-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1,6, Cyclohexandimethanol-1,4, 3-Methylpentandiol-2,4, 2-Methylpentandiol-2,4, 2,2,4-Trimethylpentandiol-1,3 und -1,5;2-Ethylhexandiol-1,3 und -1,6, 2;2-Diethylpropandiol-1,3, Hexandiol-2,5, 1,3-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-OS 24 07 674, 24 07 776, 27 15 932).

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind (Polyethylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der oben genannten Alkoholkomponenten hergestellt sind. Besonders bevorzugte Copolyester sind Poly-(ethylenglykol/butandiol-1,4)-terephthalate.

Die als Komponente A verwendeten Polyalkylenterephthalate besitzen im allgemeinen eine Intrinsic-Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C. Die Polyalkylenterephthalate können allein oder im Gemisch eingesetzt werden.

Epoxy-isocyanurat-Harze (EPIC-Harze) werden aus polyfunktionellen 1,2-Epoxiden und Polyisocyanaten hergestellt (s. DE-OS 3 323 193, EP-A 0 130 454, DE-OS 3 323 084, DE-OS 3 323 123) und sind vernetzungsfähig, d.h. sie bilden in Gegenwart von Katalysatoren und/oder bei erhöhten Temperaturen dreidimensionale Raumnetzstrukturen, die weder schmelzbar noch löslich sind.

Bei den polyfunktionellen 1,2-Epoxiden handelt es sich um beliebige, mindestens zwei Epoxidgruppen, d.h. 1,2-Epoxidgruppen aufweisende aromatische Verbindungen. Die als Komponente B) bevorzugten geeigneten Polyepoxide weisen pro Molekül 2 bis 4, vorzugsweise 2 Epoxidgruppen und ein Epoxidäquivalentgewicht von 90 bis 500, vorzugsweise 170 bis 220 auf.

Geeignete Polyepoxide sind beispielsweise Polyglycidylether mehrwertiger Phenole, beispielsweise von Brenzkatechin, Resorcin, Hydrochinon, 4,4'-Dihydroxydiphenylmethan, 4,4'-Dihydroxydiphenylcyclohexan, 4,4'-Dihydroxy-3,3'-dimethyldiphenylpropan, 4,4'-Dihydroxydiphenyl, 4-Hydroxyphenyl-4-hydroxybenzoat, 1,1-Bis-/4-hydroxyphenyl)-3,3,5-trimethylcyclohexan, 4,4'-Dihydroxydiphenylsulfon, Tris-(4-hydroxyphenyl)-methan, von den Chlorierungs- und Bromierungsprodukten der vorstehend genannten Diphenole, von Novolacken (d.h. den Umsetzungsprodukten von ein- oder mehrwertigen Phenolen mit Aldehyden, insbesondere Formaldehyd, in Gegenwart saurer Katalysatoren), von Diphenolen, die durch Veresterung von 2 mol des Natriumsalzes einer aromatischen Oxycarbonsäure mit einem mol eines Dihalogenalkans oder Dihalogenalkylethers erhalten wurden (z.B. GB-A 1 017 612) oder von Polyphenolen, die durch Kondensation von Phenolen und langkettigen, mindestens zwei Halogenatome enthaltenden Halogenparaffinen erhalten wurden (z.B. GB-A 1 024 288).

As werden erfindungsgemäß folgende Polyepoxidverbindungen oder deren Mischung für Komponente B) verwendet:
Polyglycidylether mehrwertiger Phenole, insbesondere von Bisphenol A.

Bei den als Ausgangskomponenten zur Herstellung der vernetzungsfähigen EPIC-Harze verwendeten Polyisocyanate handelt es sich um beliebige organische Polyisocyanate der aus der Polyurethanchemie an sich bekannten Art. Geeignet sind beispielsweise aliphatische, cycloaliphatische, araliphatische, aromatische und heterocyclische Polyisocyanate, wie sie z.B. von W. Siefken in Justus Liebigs Analen der Chemie, 562, Seiten 75bis 136, beschrieben werden, solche der Formel (I)

Q(NCO)ₙ (I),

in der
- n: für die Zahl 2, 3 oder 4, bevorzugt 2, steht
und
- Q: einen aliphatischen Kohlenwasserstoffrest mit 2 bis 18, vorzugsweise 6 bis 10 C-Atomen,
einen cycloaliphatischen Kohlenwasserstoffrest mit 4 bis 15, vorzugsweise 5 bis 10 C-Atomen,
einen aromatischen Kohlenwasserstoffrest mit 6 bis 15, vorzugsweise 6 bis 13 C-Atomen oder
einen araliphatischen Kohlenwasserstoffrest mit 8 bis 15, vorzugsweise 8 bis 13 C-Atomen, bedeutet, wobei die cycloaliphatischen, aromatischen oder araliphatischen Kohlenwasserstoffreste durch Alkyl, vorzugsweise C₁-C₄-Alkyl, insbesondere Methyl, substituiert sein können,
wobei das Äquivalentverhältnis von Isocyanatgruppen zu Epoxidgruppen 1,2 : 1 bis 500 : 1 ist.

Beispielhaft seien genannt Diisocyanate wie Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,35-trimethyl-5-isocyanato-methyl-cyclohexan (DE-A 1 202 785, US-A 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat u.s.w.;

Triisocyanate wie Triphenylmethan-4,4',4"-triisocyanat, Polyphenyl-poly-methylenpolyisocyanate, sie sie durch Anilin-Formaldehyd-Kondensation und anschließende Phosgenierung erhalten werden (GB 874 430 und GB 848 671), m- und p-Isocyanatophenylsulfonylisocyanate (US-P 3 454 606), perchlorierte Arylpolyisocyanate, (US-P 3 277 138), Carbodiimidogruppen aufweisende Polyisocyanate (US-P 3 152 162), Norbonan-Diisocyanate (US-P 2 492 330), Allophanatgruppen aufweisende Polyisocyanate, (GB 994890), Isocyanuratgruppen aufweisende Polyisocyanate, US-P 3 001 973), acylierte Harnstoffgruppen aufweisende Polyisocyanate DE-A 1 230 778), Biuretgruppen aufweisende Polyisocyanate, (US-P 3 124 605 und 3 201 372), durch Telomerisationsreaktionen hergestellte Polyisocyanate (US-P 3 654 106), Estergruppen aufweisende Polyisocyanate, US-P 3 567 763) Umsetzungsprodukte der oben genannten Isocyanate mit Acetalen DE-A 1 072 385) und polymere Fettsäureester enthaltende Polyisocyanate (US-A 3 455 883), Urethangruppen aufweisende Polyisocyanate (DE-A 1 230 778) usw.

Es ist auch möglich, die bei der technischen Isocyanatherstellung anfallenden Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden die technisch leicht zugänglichen Polyisocyanate,z.B. das 2,4-und 2,6-Toluylendiisocyanat sowie beliebige Gemische dieser Isomeren ("TDI"), insbesondere Polyphenyl-polymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenyl-methandiisocyanat ableiten.

Besonders bevorzugt ist die Verwendung eines Isomeren- und/oder Homologengemisches von Polyisocyanaten der Diphenylmethan-Reihe mit einem Gehalt an 2,4'-Diisocyanatodiphenylmethan von mehr als 20 Gew.-%.

Es handelt sich hierbei um Polyisocyanatgemische der Diphenylmethanreihe mit einem Gehalt an 2,4'-Diisocyanatodiphenylmethan von mehr als 20 Gew.-%, vorzugsweise von 30 bis 70Gew.-%. Neben diesen 2,4'-Isomeren enthält die besonders bevorzugte Polyisocyanat-Komponente im allgemeinen weitere isomere bzw. homologe Polyisocyanate der Diphenylmethanreihe. Dies bedeutet, daß es sich bei der besonders bevorzugten Polyisocyanat-Komponente im allgemeinen entweder um Gemische aus 2,4'-Diisocyanatodiphenylmethan mit 4,4'-Diisocyanatodiphenylmethan und gegebenenfalls 0 bis 20 Gew.-%, bezogen auf das Gesamtgemisch an 2,2'-Diisocyanato-diphenylmethan, oder aber um Gemische dieser Isomeren mit höherkernigen Polyphenyl-polymethylen-polyisocyanaten handelt. In den letztgenannten Gemischen liegt im allgemeinen ein Gehalt von 10 bis zu 60 Gew.-%, bezogen auf Gesamtgemisch an derartigen höherkernigen Polyisocyanaten, vor. Das erstgenannte, als bevorzugt einzusetzende Polyisocyanat-Komponente geeignete an 2,4'-Isomeren angereicherte Diisocyanatgemisch kann beispielsweise durch Abdestillieren eines Diisocyanatgemisches der angegebenen Zusammensetzung aus einem Polyisocyanat-Gemisch erhalten werden, wie es durch Phosgenierung von Anilin/Formaldehyd-Kondensaten entsteht. Das ebenfalls besonders bevorzugt geeignete, höherkernige Polyisocyanate enthaltende Gemisch kann beispielsweise durch Rückvermischen des zuletzt genannten Destillationsproduktes mit an 4,4'-Diisocyanatodiphenylmethan verarmten Phosgenierungsprodukt beispielsweise gemäß DE-A 1 923 214 erhalten werden. Es ist auch möglich, ein derartiges Gemisch, d.h. ein Polyisocyanatgemisch, dessen Gehalt an 2,4'-Diisocyanatodiphenylmethan den gemachten Angaben entspricht, direkt durch entsprechende Steuerung der Anilin/Formaldehyd-Kondensation zu erhalten. US-Patent 3 277 173 beschreibt beispielsweise einen Weg zu Polyamingemischen der Diphenylmethanreihe mit einem hohen Gehalt an 2,4'-Diaminodiphenylmethan. Durch Phosgenierung dieser an 2,4'-Diaminophenylmethan reichen Kondensate können dann direkt die besonders bevorzugt einsetzbaren Polyisocyanate erhalten werden. Auch in der DE-A 1 937 685 sowie in der US-A3 362 979 werden Wege zu derartigen Polyisocyanatgemischen gewiesen. Auch in besonders bevorzugt geeigneten Polyisocyanatgemischen, welche höherkernige Polyisocyanate der Diphenylmethanreihe enthalten, liegt der Gehalt an 2,4'-Diisocyanatphenylmethan oberhalb 20 Gew.-%, bezogen auf Gesamtgemisch.

Zur Herstellung der EPIC-Harze werden die polyfunktionellen 1,2-Epoxide und die Polyisocyanate in Gewichtsverhältnissen eingesetzt, die einem Äquivalentverhältnis von Isocyanatgruppen zu Epoxidgruppen von 1,2 : 1 bis 500 : 1, vorzugsweise 3 : 1 bis 65: 1 und insbesondere 5: 1 bis 30 : 1, entspricht.

Gegenstand der vorliegenden Erfindung ist weiterhin ein Verfahren zur Herstellung der obengenannten Polyester-Formmassen, wobei man die Polyester-Komponente mit dem Epoxy-isocyanurat-Harz in schmelzflüssigem Zustand mischt.

In der Regel werden die Komponenten bei Temperaturen zwischen 220-300°C, insbesondere zwischen 240 und 280° vermischt.

Zur Herstellung der erfindungsgemäßen Formmassen kommen übliche Mischaggregate wie Ein- und Doppelwellenextruder oder Schneckenwalzwerke, z.B. Bus-Cokneter, in Betracht.

Die Einarbeitung von EPIC-Harzen erfolgt in der Weise, daß man die schmelzflüssigen EPIC-Harze im Extruder in die Polyester-Schmelze eindosiert. Es ist aber 5 auch möglich, Polyester-Granulat oder -Pulver mit schmelzflüssigem oder festem EPIC-Harz im Mischaggregat zu mischen und anschließend das Polyester-Granulat zu schmelzen.

Zur Herstellung der erfindungsgemäßen Polyester-Formmassen können in thermoplastische Polyester im schmelzflüssigen Zustand eingemischt werden:
Ein Gemisch aus polyfunktionellen 1,2-Epoxiden und Polyisocyanaten, das gegebenenfalls einen Vernetzungskatalysator enthalten kann (EPIC-Harz im A-Zustand)
und/oder
reaktive, in der Hitze vernetzende Prepolymerisate aus polyfunktionellen 1,2-Epoxiden und Polyisocyanaten, die gegebenenfalls einen Vernetzungskatalysator enthalten können (EPIC-Harze im B-Zustand).

Von den verschiedenen Zuständen der EPIC-Harze hat sich der B-Zustand als am günstigsten zur Herstellung der erfindungsgemäßen Formmassen erwiesen. Die Herstellung von reaktivem EPIC-Harz im B-Zustand erfolgt, z.B. wie in der EP-A 0 272 563 beschrieben, durch Umsetzung von
a) mindestens einem organischen Polyisocyanat mit
b) mindestens einer, mindestens 2 Epoxidgruppen aufweisenden organischen Verbindungen in einer solchen Menge, die einem Äquivalentverhältnis von Isocyanatgruppen zu Epoxidgruppen von 1,2:1 bis 500:1 entspricht,
dadurch gekennzeichnet, daß man das die Komponenten a) und b) enthaltene Gemisch in Gegenwart
c) eines tertiären Amins als Katalysator zu einem Oxazolidinon- und Isocyanuratgruppen aufweisenden Zwischenprodukt umsetzt und die Reaktion bei einer Umsetzung von maximal 65 % der im Ausgangsgemisch vorliegenden Isocyanatgruppen durch Zugabe einer der Aminmenge mindestens äquivalenten Menge
d) eines alkylierend wirkenden Sulfonsäurealkylesters
abbricht.

Bei der Komponente a) handelt es sich um beliebige organische Polyisocyanate, wie sie oben beschrieben worden sind. Bei der Komponente b) handelt es sich um polyfunktionelle 1,2-Epoxide, wie sie oben beschrieben sind.

Bei der Katalysatorkomponente c) handelt es sich um beliebige mono- oder polyfunktionelle organische Amine mit tertiären Aminogruppen. Geeignete Amine der genannten Art weisen im allgemeinen ein Molekulargewicht von 59 bis zu 353, vorzugsweise von 101 bis 185 auf. Bevorzugt sind solche tertiären Amine, die bei der Reaktionstemperatur der ersten Reaktionsstufe flüssig sind. Typische Beispiele geeigneter bzw. bevorzugt geeigneter Amine sind Triethylamin, Tri-n-butylamin, N,N,N',N'-Tetramethylethylendiamin, N,N-Dimethylbenzylamin, Triethylendiamin oder Dimethyloctylamin, N-Methylmorpholin und Bis-(N,N-dimethylaminoethyl)ether.

Die Katalysatoren c) werden in einer Menge von 0,01 bis 2, vorzugsweise 0,01 bis 0,1 Gew.-%, bezogen auf das Gesamtgewicht der Komponenten a) und b), eingesetzt.

Bei den Stoppern d) handelt es sich um Katalysatorengifte für die Katalysatoren c). Geeignet sind beliebige, alkylierend wirkende Ester von organischen Sulfonsäuren. Vorzugsweise weisen diese Sulfonsäurealkylester ein Molekulargewicht von 110 bis 250 auf. Geeignet sind beispielsweise sowohl aliphatische Sulfonsäurealkylester wie n-Butansulfonsäuremethylester, n-Perfluorbutansulfonsäuremethylester oder n-Hexansulfonsäureethylester als auch aromatische Sulfonsäurealkylester wie Benzolsulfonsäuremethylester, -ethylester oder -butylester, p-Toluolsulfonsäuremethylester,ethylester oder n-butylester, 1-Naphthalinsulfonsäuremethylester, 3-Nitrobenzolsulfonsäuremethylester, 2-Naphthalinsulfonsäuremethylester.

Die genannten aromatischen Sulfonsäureester sind bevorzugt. Besonders bevorzugt wird p-Toluolsulfonsäuremethylester als Komponente d) verwendet. Ebenfalls geeignet sind auch Methyliodid und Dimethylsulfat als Komponente d).

Die Komponente d) wird mindestens in einer solchen Menge verwendet, die den tert. Aminstickstoffatomen der Komponente c) äquivalent ist.

Aus den erfindungsgemäßen thermoplastischen Polyestern können unter den für thermoplastische Polyester üblichen Verarbeitungsbedingungen durch Spritzgießen oder Extrudieren Formteile bzw. Profile hergestellt werden.

Den erfindungsgemäßen Mischungen können übliche Zusatzstoffe zugesetzt werden. Beispielhaft seien genannt: faserförmige Verstärkungsstoffe, Glaskugeln, mineralische oder metallische Füllstoffe, Pigmente, Entformungsmittel, Fließhilfsmittel, Nucleierungsmittel und Stabilisatoren, die allein oder in geeigneten Kombinationen in die erfindungsgemäßen Mischungen eingearbeitet werden können.

Als faserförmige Verstärkungsstoffe kommen in erster Linie mit Polyurethan- und Epoxidfilmbildnern sowie Epoxid- oder Aminosilanhaftvermittlern beschichtete Glasfasern mit Durchmessern von 1 bis 20 ^{.}m, vorzugsweise von 5 bis 13 ^{.}m, in Betracht. Daneben können als faserförmige Verstärkungsstoffe Kohlefasern, Aramidfasern sowie faserförmige Einkristalle, sog. Whisker, z.B. aus K-Titanat oder Si-Carbid, zur Verstärkung der erfindungsgemäßen Mischungen eingesetzt werden. Die Konzentrationen an faserförmigen Verstärkungsstoffen in den erfindungsgemäßen Mischungen betragen 5 bis 60 Gew.-%, vorzugsweise 20 bis 50 Gew.-%, bezogen auf 100 Gew.-% aus A) und B).

Als mineralische Füllstoffe seien Kaolin, Wollastonit, Glimmer, Talkum amorpher Quarz, kristalliner Quarz, Metalloxide und -sulfide, z.B. TiO₂, ZnO, ZnS, Carbonate wie z.B. MgCO₃, CaCO₃ oder Sulfate wie z.B. CaSO₄, BaSO₄ u.s.w. genannt, als metallische Füllstoffe Eisen, Aluminium, Kupfer u.s.w. Weiterhin können Farb- und Leitruße und/oder Graphit als Füllstoffe eingesetzt werden.

Diese Füllstoffe können in Konzentrationen von 10 bis 80 Gew.-%, vorzugsweise von 20 bis 60 Gew.-% [bezogen auf 100 Gew.-% aus A) und B)], in die erfindungsgemäßen Mischungen eingearbeitet werden.

Es ist weiterhin vorteilhaft, Kombinationen aus 10 bis 60 Gew.-% faserförmigen Verstärkungsstoffen und 60 bis 10 Gew.-% Mineralfüllstoffen zur Verstärkung der erfindungsgemäßen Mischungen in diese einzuarbeiten [jeweils bezogen auf 100 Gew.-% aus A) und B)].

Die Einarbeitung der Hilfsstoffe in die erfindungsgemäßen Polyester-Formmassen kann auf üblichen Mischaggregaten, z.B. Ein- oder Zweiwellenextrudern, erfolgen. Es ist jedoch auch möglich, die Hilfsstoffe gleichzeitig mit den EPIC-Harzen in die Polyester einzumischen.

Die erfindungsgemäßen thermoplastischen Polyester-Formmassen werden zur Herstellung geformter Körper verwendet.Sie können zusätzlich Farbmittel wie Pigmente, Verarbeitungshilfsmittel, z.B. Gleit- und Entformungshilfmittel, Stabilisatoren, Flammschutzadditive u.s.w., enthalten.

### Verwendete Komponenten:

### Polyalkylenterephthalat:

Polybutylenterephthalat (PBT) mit einer Schmelzviskosität von 140 Pa.s (gemessen bei T = 260°C / 1000s⁻¹, bzw. einer Intrinsic-Viskosität von 0,905 bis 0,945 dl/g (gemessen in Phenol/o-dichlorbenzol 1:1 bei 25°C)

### EPIC-Harz:

Herstellung eines in der Hitze vernetzungsfähigen Präpolymerisates (EPIC-Harz im B-Zustand).

80 Gew.-Teile 4,4'-Diisocyanato-diphenylmethan (NCO-Gehalt 33,6 %) werden bei 50°C mit 20 Gew.-Teilen des Diglycidylethers von Bisphenol A (Epoxidzahl 0,585) und 0,5 ml (3,2 mmol) Dimethylbenzylamin gemischt und anschließend auf 120°C aufgeheizt. Die leicht exotherme Reaktion zeigt den sofortigen Beginn der Oxazolidinon- und Isocyanurat-Bildung an. Nach 15 Minuten Reaktionszeit ohne externe Heizung wird der Ansatz auf 90°C abgekühlt. Dann wird die Reaktion durch Zusatz von 6,5 ml einer Stopperlösung (15,4 gew.-%igen Lösung von p-Toluolsulfonsäuremethylester in 4,4'-Diisocyanatodiphenylmethan) abgebrochen. Der Ansatz wird dann auf eine Teflonplatte gegossen, wo er zu einem bei ca. 40°C erweichenden, bei Raumtemperatur festen und klebfreien Harz erstarrt, NCO-Gehalt: 13,8%.

### Beispiele

### Beispiel 1

In einem Doppelschneckenextruder ZSK 32 von Werner und Pfleiderer werden 98 Gew.-Teile PBT und 2 Gew.-Teile EPIC-Harz bei 260°C und einer Schneckendrehzahl von 150 U/min extrudiert und die schmelzflüssige Mischung als Rundstrang granuliert. Aus diesem Granulat werden bei 260°C Schmelztemperatur und 80°C Werkzeugtemperatur Prüfstäbe /80X10X4 mm³) und Schulterstäbe (Nr. 3 nach DIN 53455) gespritzt. Mit diesen Probekörpern wurde Zugversuch nach DIN 53455 und Schlagbiegeversuch nach ISO 180 Methode 1C durchgeführt.

### Vergleichsbeispiel 1:

Aus einem PBT mit einer Schmelzviskosität von 140 Pa.s (gemessen bei T = 260°C / 100s⁻¹) wurden Probekörper mit Abmessungen von 80X10X4 mm³ und Schulterstäbe Nr. 3 nach DIN 53455bei einer Schmelztemperatur von 260°C und einer Werkzeugtemperatur von 80°C gespritzt. Mit diesen Probekörpern wurden Zugversuch nach ISO IR S27, DIN 53455 und Schlagbiegeversuch nach ISO 180 Methode 1C durchgeführt.

**Tabelle 1**

| Eigenschaften | Prüfbedingung | PBT (Vergleich) | PBT + 2 % EPIC (Bsp. 1) |
|---|---|---|---|
| Viskosität (Pas) | 260°C/1000s⁻¹ | 140 | 230 |
| Reißdehnung (%) | 50 mm/min | 20 | 94 |
| E-Modul (N/mm²) | 1 mm/min | 2500 | 2800 |
| Schlagzähigkeit | 23°C | 100 | n.g.* |
| (kJ/m²) | -30°C | 65 | 150 |
| n.g.* = nicht gebrochen | | | |

Der Vergleich zeigt, daß die erfindungsgemäße Mischung dem Ausgangspolyesters hinsichtlich Reißdehnung und Schlagzähigkeit in der Kälte weit überlegen ist.

### Beispiel 2

wie Beispiel 1 zuzüglich 30 % Glasfasern (GF)

**Tabelle 2**

| | Prüfbedingung | Vergleichsbeispiel 2 | Beispiel 2 |
|---|---|---|---|
| PBT | - | 70 | 70 |
| GF(%) | - | 30 | 30 |
| EPIC (%) | - | - | 2 |
| Schlagzähigkeit (kJ/m²) | 23°C | 48 | 60 |
| Viskosität (Pa.s) | 260°C/1000s⁻¹ | 200 | 260 |

### Beispiel 3

In einem Doppelschneckenextruder ZSK 32 von Werner & Pfleiderer werden 96 Gew.-Teile Polyethylenterephthalat (PET) und 4 Gew.-Teile EPIC-Harz bei 290°C und einer Schneckendrehzahl von 150 U/min extrudiert und die schmelzflüssige Mischung als Rundstrang granuliert. Aus diesem Granulat wurde bei 280°C die Schmelzeviskosität gemessen und mit einem PET verglichen (Tabelle 3).

**Tabelle 3**

| | | Vergleich | Beispiel 3 |
|---|---|---|---|
| PET | % | 100 | 96 |
| EPIC-Harz | % | - | 4 |
| Viskosität (Pa.s) | 280°C/1000s⁻¹ | 150 | 250 |

## Patentansprüche

1. Thermoplastische Polyalkylenterephthalat-Formmassen, hergestellt durch Abmischen von
A) 99,9 bis 80,0 Gew.-% thermoplastischen Polyalkylenterephthalate
mit
B) 0,1 bis 20,0 Gew.-% eines Epoxy-isocyanurat-Harzes, welches hergestellt ist aus Polyglycidylether mehrwertiger Phenole und Polyisocyanaten, wobei die Polyisocyanate hergestellt werden aus Verbindungen der Formel (I):
Q(NCO)ₙ (I)
in der
n für die Zahl 2, 3 oder 4 steht
und
Q einen aliphatischen Kohlenwasserstoffrest mit 2 bis 18 C-Atomen,
einen cycloaliphatischen Kohlenwasserstoffrest mit 4 bis 15 C-Atomen,
einen aromatischen Kohlenwasserstoffrest mit 6 bis 15 C-Atomen oder
einen araliphatischen Kohlenwasserstoffrest mit 8 bis 15 C-Atomen, bedeutet, wobei die cycloaliphatischen, aromatischen oder araliphatischen Kohlenwasserstoffreste durch Alkyl substituiert sein können,
wobei das Äquivalentverhältnis von Isocyanatgruppen zu Epoxidgruppen 1,2 : 1 bis 500 : 1 ist, in der Schmelze.

2. Thermoplastische Polyalkylenterephthalat-Formmassen gemäß Anspruch 1, mit 99,9 bis 85 Gew.-% der Komponente A) und 0,1 bis 15 Gew.-% der Komponente B).

3. Thermoplastische Polyalkylenterephthalat-Formmassen gemäß Anspruch 1, wobei Komponente A) Polybutylenterephthalat, Polyethylenterephthalat oder ein Gemisch daraus ist.

4. Thermoplastische Polyalkylenterephthalat-Formmassen gemäß Anspruch 1, wobei die Formmassen jeweils bezogen auf 100 Gew.-% aus A) und B), 5 bis 60 Gew.-% Verstärkungsstoffe und 10 bis 80 Gew.-% Füllstoffe sowie weitere Additive, ausgewählt aus der Reihe der Verarbeitungshilfsmittel, Farbmittel, Flammschutzmittel, enthalten.

5. Verfahren zur Herstellung von thermoplastischen Polyalkylenterephthalat-Formmassen gemäß Anspruch 1, wobei man die Komponenten in der Schmelze vermischt.

6. Verwendung der Formmassen gemäß Anspruch 1 zur Herstellung von Formkörpern.

7. Formkörper, hergestellt aus Formmassen gemäß Anspruch 1.

## Claims

1. Thermoplastic polyalkylene terephthalate moulding compositions, prepared by blending
A) 99.9 to 80.0 wt.% of thermoplastic polyalkylene terephthalates
and
B) 0.1 to 20.0 wt.% of an epoxy/isocyanurate resin, which is prepared from polyglycidyl ethers of polyhydric phenols and polyisocyanates, wherein the polyisocyanates are prepared from compounds of the formula (I):
Q(NCO)ₙ (I)
in which
n represents the number 2, 3 or 4
and
Q represents an aliphatic hydrocarbon group with 2 to 18 carbon atoms,
a cycloaliphatic hydrocarbon group with 4 to 15 carbon atoms,
an aromatic hydrocarbon group with 6 to 15 carbon atoms or
an araliphatic hydrocarbon group with 8 to 15 carbon atoms, wherein the cycloaliphatic, aromatic or araliphatic hydrocarbon groups may be substituted by alkyl groups,
wherein the ratio by equivalents of isocyanate groups to epoxide groups is 1.2 : 1 to 500 : 1, in the melt.

2. Thermoplastic polyalkylene terephthalate moulding compositions according to Claim 1, with 99.9 to 85 wt.% of component A) and 0.1 to 15 wt.% of component B).

3. Thermoplastic polyalkylene terephthalate moulding compositions according to Claim 1, wherein component A) is polybutylene terephthalate, polyethylene terephthalate or a mixture thereof.

4. Thermoplastic polyalkylene terephthalate moulding compositions according to Claim 1, wherein the moulding compositions contain 5 to 60 wt.% of reinforcing materials and 10 to 80 wt.% of fillers, each being with reference to 100 wt.% of A) and B), as well as other additives selected from the set consisting of processing aids, colorants, flame retardants.

5. A process for preparing thermoplastic polyalkylene terephthalate moulding compositions according to Claim 1, wherein the components are mixed in the melt.

6. Use of the moulding compositions according to Claim 1 to produce moulded articles.

7. Moulded articles, produced from moulding compositions according to Claim 1.

## Revendications

1. Matières à mouler thermoplastiques de poly(alkylène téréphtalate) préparées par mélange
A) de 99,9 à 80,0% en poids de poly(alkylène téréphtalate)thermoplastique
avec
B) de 0,1 à 20,0% en poids, d'une résine époxy-isocyanurate, laquelle est préparée à partir de polyglycidyléther de phénols polyvalents et de polyisocyanates, les polyisocyanates étant préparés à partir de composés de la formule (I):
Q(NCO)ₙ (I)
dans laquelle
n représente le nombre 2, 3 ou 4
et
Q représente un reste hydrocarboné aliphatique avec de 2 à 18 atomes de C,
un reste hydrocarboné cycloaliphatique avec de 4 à 15 atomes de C,
un reste hydrocarboné aromatique avec de 6 à 15 atomes de C ou
un reste hydrocarboné araliphatique avec de 8 à 15 atomes de C, les restes hydrocarbonés cycloaliphatiques, aromatiques ou araliphatiques pouvant être substitués par un groupe alkyle,
le rapport d'équivalent des groupes isocyanate aux groupes époxyde étant de 1,2:1 à 500:1 dans la masse fondue.

2. Matières à mouler thermoplastiques de poly(alkylène téréphtalate) selon la revendication 1 avec de 99,9 à 85% en poids du constituant A) et de 0,1 à 15% en poids du constituant B).

3. Matières à mouler thermoplastiques de poly(alkylène téréphtalate) selon la revendication 1, le constituant A) étant du poly(butylène téréphtalate), du poly(éthylène téréphtalate) ou un mélange de ceux-ci.

4. Matières à mouler thermoplastiques de poly(alkylène téréphtalate) selon la revendication 1, les matières à mouler contenant à chaque fois, rapporté à 100% en poids de A) et de B), de 5 à 60% en poids de matières de renforcement et de 10 à 80% en poids de charges ainsi que d'autres additifs choisis parmi des auxiliaires de façonnage, des colorants, des agents ignifuges.

5. Procédé pour la préparation de matières à mouler thermoplastiques de poly(alkylène téréphtalate) selon la revendication 1, les constituants étant mélangés dans la masse fondue.

6. Utilisation des matières à mouler selon la revendication 1 pour la préparation de corps moulés.

7. Corps moulé préparé à partir des matières à mouler selon la revendication 1.
